(19) Europäisches Patentamt
European Patent Office
Office européen des brevets

(11) **EP 2 538 476 B1**

(12) **EUROPEAN PATENT SPECIFICATION**

(45) Date of publication and mention
of the grant of the patent:
**12.03.2014 Bulletin 2014/11**

(51) Int Cl.:
*H01M 6/08* (2006.01)        *H01M 2/18* (2006.01)
*H01M 4/06* (2006.01)        *H01M 4/50* (2010.01)

(21) Application number: **11860718.3**

(22) Date of filing: **22.11.2011**

(86) International application number:
**PCT/JP2011/006493**

(87) International publication number:
**WO 2012/143984 (26.10.2012 Gazette 2012/43)**

(54) **ALKALINE PRIMARY BATTERY**

ALKALI-PRIMÄRBATTERIE

BATTERIE PRIMAIRE ALCALINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.04.2011 JP 2011091674**

(43) Date of publication of application:
**26.12.2012 Bulletin 2012/52**

(73) Proprietor: **Panasonic Corporation
Osaka 571-8501 (JP)**

(72) Inventors:
• **UZUKA, Shunsuke**
  **Osaka-shi**
  **Osaka 540-6207 (JP)**
• **SUMIYAMA, Shinichi**
  **Osaka-shi**
  **Osaka 540-6207 (JP)**
• **SYOJI, Yasuhiko**
  **Osaka-shi**
  **Osaka 540-6207 (JP)**

(74) Representative: **TBK
Bavariaring 4-6
80336 München (DE)**

(56) References cited:
**JP-A- 9 180 736        JP-A- 61 054 157
JP-A- 2004 508 686        JP-A- 2009 151 958
JP-A- 2010 086 860        JP-A- 2010 123 319
US-A- 5 814 419        US-A- 6 040 088**

**Description**

[Technical Field]

The present invention relates to alkaline primary batteries, and specifically relates to an improvement of positive and negative electrodes for alkaline primary batteries.

[Background Art]

Alkaline primary batteries have been conventionally used in various devices. In recent years, with increase in the load of the devices for which alkaline primary batteries are used, batteries excellent in heavy load discharge characteristics are demanded.

Alkaline primary batteries, however, have a problem in that a high resistance coating containing a zinc oxide is formed on the surface of zinc serving as the negative electrode active material through the discharge reaction, and therefore, the zinc present inside cannot be effectively utilized for the discharge reaction. As such, even after the device can no longer operate upon complete consumption of the specified electric capacity, unreacted zinc will remain in the battery (hereinafter sometimes referred to as "remaining zinc").

The remaining zinc generates gas in the battery, which may cause a leakage of alkaline electrolyte (hereinafter sometimes simply referred to as "leakage"). Particularly when the battery is kept mounted in a device in the power-on state even after the device can no longer operate upon complete consumption of the specified electric capacity, the overdischarge of the battery proceeds, and a larger amount of gas is generated, increasing the possibility of occurrence of leakage.

The higher the load at the time of discharge is, the more likely a high resistance coating is formed on the surface of the zinc, and the more difficult it is to utilize the zinc effectively. For this reason, conventionally, the electric capacity of the negative electrode has been set larger than that of the positive electrode so that the heavy load discharge characteristics and the discharge capacity of the battery can be improved.

However, in the case where the electric capacity of the negative electrode is set larger than that of the positive electrode, the amount of remaining zinc upon complete consumption of the specified electric capacity of the battery is significantly increased. When the battery is overdischarged, a very large amount of gas is generated in the battery, and it becomes difficult to suppress a leakage of alkaline electrolyte.

In order to avoid the problem of leakage as mentioned above, it has been required to decrease the amount of remaining zinc during overdischarge, thereby to reduce the amount of gas to be generated in the battery.

For example, in Patent Literature 1, zinc alloy particles 10 to 80 mass% of which can pass through a 200-mesh sieve are used in the negative electrode, thereby to set the ratio of the electric capacity of the negative electrode to that of the positive electrode (negative electrode electric capacity / positive electrode electric capacity) to 1.05 to 1.10. Patent Literature 1 teaches that by using zinc alloy particles with high reactivity and decreasing the ratio of the electric capacity of the negative electrode to that of the positive electrode as above, the amount of remaining zinc at the end of discharge can be reduced to be as small as possible, and the gas generation during overdischarge can be suppressed

In Patent Literature 2, a negative electrode current collector made of zinc or a zinc alloy not containing copper is used, and the ratio of the electric capacity of the negative electrode to that of the positive electrode (negative electrode electric capacity / positive electrode electric capacity) is set to 1.00 to 1.25. In Patent Literature 2, the gas generation is suppressed by using the above negative electrode current collector. This is based on the observation that, from the conventional negative electrode current collector containing copper as one of its constituent elements, copper ions are leached out when an alkaline battery is overdischarged, and deposit on the unreacted zinc, and this causes and accelerates gas generation.

[Citation List]

[Patent Literature]

[PTL 1] Japanese Laid-Open Patent Publication No. 2009-151958
[PTL 2] Japanese Laid-Open Patent Publication No. 2009-43417

[Summary of Invention]

[Technical Problem]

In Patent Literatures 1 and 2, an overdischarge test is performed with respect to one alkaline primary battery, to evaluate the gas generation therein.

However, when an alkaline primary battery is actually mounted in a device, two or more, for example, two to eight batteries are usually used, and in many cases, four batteries are used by being connected in series. In the case of using two or more alkaline primary batteries by connecting them in series, when the batteries are overdischarged, a heavier load is applied from the battery whose electric capacity is large to the battery whose electric capacity is small. In other words, in such a case, the batteries are exposed to more severe environment than in the case of using one alkaline primary battery.

As such, even though the gas generation is suppressed in an overdischarge test with respect to one alkaline primary battery, in the case of connecting the same batteries in series, there is a possibility that the gas generation cannot be suppressed, causing a leakage. Therefore, in order to further improve the leakage resistance of an alkaline primary battery, it is necessary to perform an overdischarge test under the condition where two or more alkaline primary batteries are connected in series.

Further, in Patent Literature 2, a specific negative electrode current collector must be used, which poses a problem that the zinc contained in the negative electrode current collector is likely to be involved in the reaction, as an active material. If this happens, the surface of the negative electrode current collector is coated with oxidized zinc, and the conductivity is lowered, resulting in a deterioration in discharge performance.

As discussed above, in an alkaline primary battery, there are still many technical problems to be solved, with regard to the suppression of leakage during overdischarge.

[Solution to Problem]

The present invention intends to provide an alkaline primary battery capable of effectively suppressing a leakage during overdischarge, even in the case of using two or more batteries by connecting them in series.

One aspect of the present invention relates to an alkaline primary battery including: a bottomed cylindrical battery case; a cylindrical positive electrode having a hollow, being in contact with an inner wall of the battery case, and including manganese dioxide; a gel negative electrode being in the hollow of the positive electrode, and including zinc or zinc alloy; a separator interposed between the positive electrode and the negative electrode; and an alkaline electrolyte. The positive electrode has an electric capacity C1 and a height L1, and the negative electrode has an electric capacity C2 and a height L2. The electric capacity C1 and the electric capacity C2 satisfy the relational expression (1):

$$1.05 \leq C2/C1 \leq 1.25 \qquad (1),$$

and
the height L1 and the height L2 satisfy the relational expression (2):

$$0.85 \leq L2/L1 \leq f(C2/C1) \qquad (2),$$

where $f(C2/C1) = -0.3058 \times C2/C1 + 1.3153$.

[Advantageous Effects of Invention]

According to the present invention, in an alkaline primary battery, it is possible to ensure sufficient discharge performance and reduce the amount of remaining zinc in the negative electrode, and therefore, to effectively suppress a leakage during overdischarge even in the case of using two or more batteries by connecting them in series.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawings]

[Fig. 1] A partially cut-away front view of a AA-size alkaline primary battery according to one embodiment of the present invention.

[Fig. 2] A graph showing a relationship between the ratio C2/C1 of the electric capacity of the negative electrode to that of the positive electrode and the ratio L2/L1 of the height of the negative electrode to that of the positive electrode, with respect to some of the batteries of Example 2.

[Fig. 3] A graph showing a relationship between the discharge time and the closed-circuit voltage when four batteries are connected in series and discharged through a resistance of 16 Ω, with respect to battery V1 and battery V5 of Example 2.

[Description of Embodiments]

The present inventors have noted that, with regard to the conventional alkaline primary batteries which have been considered excellent in the leakage resistance during overdischarge, even though no leakage occurs in the case of using a single battery, a leakage occurs at times in the case of using two or more batteries by connecting them in series. They have examined the factors that affect a leakage during overdischarge, and found that when the ratio C2/C1 of the electric capacity C2 of the negative electrode to the electric capacity C1 of the positive electrode is increased, even though no leakage occurs during overdischarge in the case of using a single battery, a leakage tends to occur during overdischarge in the case of using two or more batteries by connecting them in series.

The present inventors have further noted that in an alkaline primary battery, when the positive and negative electrodes expand due to the discharge reaction, there are cases where the volume of a portion not facing the positive electrode of the negative electrode is increased, and this causes the amount of remaining zinc to increase. Particularly during overdischarge, the negative electrode expands to a greater extent than the positive electrode, and the expansion of the negative electrode is predominant in its height direction, the height of the negative electrode exceeds that of the positive electrode.

On the other hand, in order to efficiently operate the device, it is advantageous to align the heights of the positive and negative electrodes during discharge as much as possible. The present inventors have found that when designed like this, the volume of a portion not facing the positive electrode of the negative electrode is increased during overdischarge, and the amount of remaining zinc is significantly increased in the negative electrode.

So, the present inventors have controlled the ratio L2/L1 of the height L2 of the negative electrode to the height L1 of the positive electrode within a specific range on the basis of estimated expansion of the positive and negative electrodes of an alkaline primary battery during discharge, and found that this can suppress a leakage during overdischarge.

The present inventors have further found that there are cases where a leakage during overdischarge can be suppressed even though the electric capacity ratio C2/C1 is high, by controlling the height ratio L2/L1 within a specific range. A trend has been observed in which a leakage during overdischarge is more likely to occur as the electric capacity ratio C2/C1 is increased; however, it has been found that the relationship between the electric capacity ratio C2/C1 and the occurrence of leakage is influenced also by the value of the height ratio L2/L1.

Based on the above findings, in the present invention, in an alkaline primary battery including: a bottomed cylindrical battery case; a cylindrical positive electrode having a hollow, being in contact with the inner wall of the battery case, and including manganese dioxide; a gel negative electrode being in the hollow of the positive electrode, and including zinc or zinc alloy; a separator interposed between the positive electrode and the negative electrode; and an alkaline electrolyte, the ratio of the electric capacity of the negative electrode to that of the positive electrode, and the ratio of the height of the negative electrode to that of the positive electrode are each controlled within a specific range. Specifically, when the positive electrode has an electric capacity C1 and a height L1, and the negative electrode has an electric capacity C2 and a height L2, in the alkaline primary battery of the present invention, the electric capacities C1 and C2 satisfies the relational expression (1):

$$1.05 \leq C2/C1 \leq 1.25 \qquad (1),$$

and
the heights L1 and L2 satisfy the relational expression (2):

$$0.85 \leq L2/L1 \leq f(C2/C1) \qquad (2),$$

where f(C2/C1) = -0.3058 × C2/C1 + 1.3153.

As described above, in the present invention, the balance between the ratio C2/C1 of the electric capacity of the negative electrode to that of the positive electrode and the ratio L2/L1 of the height of the negative electrode to that of the positive electrode is controlled within a preferable range which differs from the conventional range. This improves the utilization rate of the negative electrode and thus the discharge performance, and makes it easy to suppress a leakage during overdischarge. Specifically, the volume of a portion not facing the positive electrode of the negative electrode is reduced, and thus the amount of remaining zinc is reduced, and as a result, a leakage is suppressed. In other words, the area of the portion where the positive and negative electrodes face each other in an overdischarge range can be maximized, and the material utilization rate can be increased. As such, the amount of remaining zinc in the overdischarge range is reduced, and a leakage during overdischarge can be effectively suppressed.

When the electric capacity ratio C2/C1 is below 1.05, the utilization rate of the positive electrode is significantly reduced, failing to provide a sufficient discharge capacity. When the electric capacity ratio C2/C1 exceeds 1.25, the amount of negative electrode is increased, and the amount of positive electrode that can be contained in the battery becomes relatively small, failing to provide a sufficient discharge capacity at times.

The electric capacity ratio C2/C1 can be calculated as follows. The positive and negative electrodes are taken out from an alkaline primary battery and subjected to treatment such as washing and leaching. Thereafter, the mass of the active material contained in each electrode is calculated, and the calculated mass is multiplied by the theoretical capacity of the active material, to give electric capacities C1 and C2 of the positive and negative electrodes, respectively. The electric capacity C2 of the negative electrode is divided by the electric capacity C1 of the positive electrode, to give an electric capacity ratio C2/C1.

The amount of active material to be oxidized and reduced by self-discharge is extremely small. Therefore, the electric capacity ratio C2/C1 may be determined at any point of time, as long as it is determined after the assembling of a battery and before the start of discharge of the battery mounted in a device. For example, it may be determined within one year or within a half year after the assembling of a battery.

The right hand side of the expression (2), (C2/C1) = -0.3058 × C2/C1 + 1.3153, can be determined on the basis of the relationship between the electric capacity ratio C2/C1 and the height ratio L2/L1 of an alkaline primary battery and the presence or absence of leakage during overdischarge. Specifically, the presence or absence of leakage during overdischarge when two or more batteries are connected in series is checked under the condition of varying electric capacity ratios C2/C1 or height ratios L2/L1. The values of the height ratio L2/L1 are plotted against the values of the electric capacity ratio C2/C1, and for each value of the electric capacity ratio C2/C1, the plotted point at which the height ratio L2/L1 is the highest among the batteries exhibiting no leakage is determined. These points thus determined are unexpectedly distributed on one almost straight line, and this straight line, i.e., primary regression line, is expressed by the above equation of f(C2/C1).

It is preferable to check the presence or absence of leakage, under the condition where two or more alkaline primary batteries are connected in series. For example, two to eight, preferably three to six, and more preferably four alkaline primary batteries are connected in series, and in this state, the batteries are discharged until they are overdischarged, and then, the presence or absence of leakage is checked. The alkaline primary batteries used for determination of f(C2/C1) or measurement of C2/C1 and L2/L1 are cylindrical batteries, and preferably AA-size cylindrical batteries.

When the height ratio L2/L1 exceeds the value of f(C2/C1), the height of the negative electrode will far exceed the height of the positive electrode in the overdischarge range. Because of this, the volume of a portion not facing the positive electrode of the negative electrode is increased, and the material utilization rate is reduced, which increases the amount of remaining zinc in the overdischarge range. This will results in the occurrence of leakage during overdischarge. On the other hand, when the height ratio L2/L1 is below 0.85, the reaction efficiency drops too much.

An embodiment of the present invention is specifically described below with reference to the drawings appended hereto. The below-described embodiment, however, should not be construed as a limitation to the present invention, and can be modified as appropriate without departure from the scope that does not impair the effect of the present invention. Further, it can be combined with another embodiment.

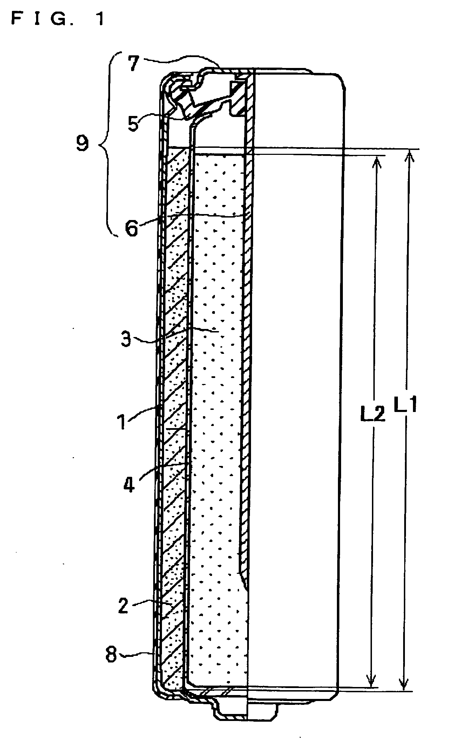

Fig. 1 is a front view of a AA-size alkaline primary battery according to one embodiment of the present invention, with one half thereof being shown in cross-section. As shown in Fig. 1, an alkaline primary battery includes a cylindrical positive electrode 2 having a hollow, a negative electrode 3 disposed in the hollow of the positive electrode 2, a separator 4 interposed therebetween, and an alkaline electrolyte (not shown), and these are accommodated in a bottomed cylindrical battery case 1 which also serves as a positive electrode terminal. The positive electrode 2 is disposed in contact with the inner wall of the battery case 1, and in the hollow of the positive electrode 2, the negative electrode 3 in a gel state is filled with the separator 4 interposed therebetween. The separator 4 is of a bottomed cylindrical shape, and is disposed on the inner side of the hollow of the positive electrode 2, to separate the positive electrode 2 from the negative electrode 3 and separate the negative electrode 3 from the battery case 1. The positive electrode 2 contains manganese dioxide and an alkaline electrolyte, and the negative electrode 3 contains zinc powder or zinc alloy powder, an alkaline electrolyte, and a gelling agent.

The opening of the battery case 1 is sealed by a sealing unit 9. The sealing unit 9 comprises a gasket 5, a negative electrode terminal plate 7 which also serves as a negative electrode terminal, and a negative electrode current collector 6. The negative electrode current collector 6 is inserted in the negative electrode 3. The negative electrode current collector 6 is shaped like a nail having a head and a shank, and the shank is inserted through the through hole provided in the center cylindrical portion of the gasket 5. The head of the negative electrode current collector 6 is welded to the flat portion at the center of the negative electrode terminal plate 7. The opening end of the battery case 1 is crimped onto the flange at the periphery of the negative electrode terminal plate 7 with the outer circumference end of the gasket 5 interposed therebetween. The outside surface of the battery case 1 is covered with an outer label 8.

As shown in Fig. 1, the height L1 of the positive electrode and the height L2 of the negative electrode are each a distance from the bottom to the top surface of the electrode. More specifically, the height L2 of the negative electrode is a distance from the upper side of the bottom of the separator to the top surface of the gel negative electrode. When the top surface of the negative electrode is not horizontal with the bottom surface hereof, the height L2 can be measured assuming that a horizontal top surface is present halfway between the uppermost point and the lowermost point of the top surface. The height ratio L2/L1 can be calculated by dividing the height L2 of the negative electrode by the height L1 of the positive electrode.

For some period of time upon assembling of an alkaline primary battery, the positive and negative electrodes expand, and the heights thereof change. For this reason, the heights L1 and L2 of the positive and negative electrodes are preferably measured after the electrodes stopped expanding, for example, three to seven days after the battery was assembled. Further, upon starting of discharge of an alkaline primary battery mounted in a device, the positive and negative electrodes expand, and the heights thereof change. For this reason, the heights L1 and L2 of the positive and negative electrodes can be measured before the alkaline primary battery mounted in a device starts being discharged, and for example, may be measured within one year or within a half year after the battery was assembled.

A detailed description of an alkaline primary battery is given below.

(Positive electrode)

The positive electrode usually includes, in addition to manganese dioxide serving as a positive electrode active material, graphite serving as a conductive agent, and an alkaline electrolyte. The positive electrode may further include a binder, as needed.

The manganese dioxide is preferably an electrolytic manganese dioxide. The manganese dioxide has a crystal structure of, for example, $\alpha$-form, $\beta$-form, $\gamma$-form, $\delta$-form, $\varepsilon$-form, $\eta$-form, $\eta$-form, or ramsdellite-form.

In alkaline primary batteries, manganese dioxide is used in the form of powder. Manganese dioxide powder has a property such that the larger the BET specific surface area is, the greater the number of manganese vacancies is. If the manganese vacancies are increased, migration of protons during discharge reaction is facilitated, and manganese dioxide is likely to expand as the discharge proceeds, which accelerates the expansion of the positive electrode. In view of this, it is preferable to use manganese dioxide in the form of powder having a BET specific surface area of 35 $m^2/g$ or more. By using such powder, in the overdischarge range, the expansion of the positive electrode can readily follow the expansion of the negative electrode which is prone to expand (i.e., the gap in height between the positive electrode and the negative electrode is unlikely to occur), the amount of remaining zinc can be further reduced.

On the other hand, in general, the larger the BET specific surface area is, the smaller the particle size of the powder tends to be. In terms of the formability of the positive electrode, it is advantageous to set the BET specific surface area to about 50 $m^2/g$ or less, and preferably 48 $m^2/g$ or less. These upper limits and lower limits of the specific surface area may be selected as appropriate and combined, and the specific surface area may be, for example, in a range of 35 to 48 $m^2/g$.

The BET specific surface area is obtained by measuring and calculating a surface area using a Brunauer-Emmett-Teller (BET) equation, which is a theoretical equation of multilayer adsorption, and is a ratio of the active material surface area to the pore volume. The BET specific surface area can be measured with an instrument for measuring a specific surface area by nitrogen adsorption method (e.g., ASAP 2010, available from Micromeritics Instrument Corporation).

In view of the packed property of the positive electrode and the diffusibility of electrolyte in the positive electrode, the average particle diameter (D50) of the manganese dioxide is, for example, 25 to 60 $\mu$m, and preferably 30 to 45 $\mu$m.

Graphite serving as a conductive agent may be, for example, natural graphite or artificial graphite, which is usually used in the form of powder.

The average particle diameter (D50) of the graphite is preferably 3 to 20 $\mu$m, and more preferably 5 to 15 $\mu$m.

The average particle diameter (D50) is the median size in a volumetric particle size distribution. The average particle diameter can be measured with, for example, a laser diffraction/scattering particle size distribution meter (LA-920) available from HORIBA Ltd.

The content of the conductive agent in the positive electrode is, for example, 3 to 10 parts by mass, and preferably 5 to 9 parts by mass per 100 parts by mass of the manganese dioxide.

The positive electrode is obtained by, for example, compression-molding into pellets a positive electrode material mixture including manganese dioxide, graphite, alkaline electrolyte, and, as needed, binder. Alternatively, the positive electrode material mixture may be formed into flakes or granules, then classified as needed, and thereafter, compression-molded into pellets.

The pellets are inserted into a battery case, and then subjected to secondary compression with a predetermined tool, so as to be brought into close contact with the inner wall of the battery case.

(Negative electrode)

The negative electrode includes zinc or zinc alloy as a negative electrode active material.

The zinc alloy preferably contains at least one selected from the group consisting of indium, bismuth and aluminum, in view of the corrosion resistance. The content of indium in the zinc alloy is, for example, 0.01 to 0.1 mass%, and the content of bismuth is, for example, 0.003 to 0.02 mass%. The content of aluminum in the zinc alloy is, for example, 0.001 to 0.03 mass%. The content of elements other than zinc in the zinc alloy is preferably 0.025 to 0.08 mass%, in view of the corrosion resistance.

The zinc or zinc alloy is usually used in the form of powder. Zinc or zinc alloy powder is more active and exhibits more excellent output characteristics as the particles thereof become smaller in size (e.g., particles passing through a 200-mesh sieve). For this reason, the zinc or zinc alloy powder preferably contains such small particles in a certain ratio. The ratio of particles passing through a 200-mesh sieve contained in the zinc or zinc alloy powder is, for example, 20 to 55 mass%, and preferably 25 to 40 mass%.

However, small particles are highly active, but tend to be deactivated as the discharge reaction approaches its end. Because of this, if the particle size of the zinc or zinc alloy powder is too small, it may happen that the expected reaction at the negative electrode does not occur in the overdischarge range, and the amount of remaining zinc is increased.

As such, the zinc or zinc alloy powder preferably contains comparatively large particles (e.g., particles not passing through a 100-mesh sieve).

In view of suppressing the deactivation in the overdischarge range and facilitating the reaction at the negative electrode, thereby to reduce the amount of remaining zinc, particles not passing through a 100-mesh sieve are contained in a ratio of, for example, 20 mass% or more, and preferably 25 mass% or more. However, even if the ratio of large particles is increased to a certain level or more, the effect will not be increased in correspondence with the increase in the ratio, and therefore, it is advantageous to set the ratio of particles not passing through a 100-mesh sieve to, for example, about 60 mass% or less, and preferably 55 mass% or less. These upper limits and lower limits may be selected as appropriate and combined, and the ratio of particles not passing through a 100-mesh sieve may be, for example, in a range of 20 to 55 mass%.

In view of the packed property of the negative electrode and the diffusibility of alkaline electrolyte in the negative electrode, the average particle diameter (D50) of the zinc or zinc alloy powder is, for example, 100 to 200 $\mu$m, and preferably 110 to 160 $\mu$m.

In the present invention, the electric capacity ratio C2/C1 is controlled in a specific range. The electric capacity ratio C2/C1 can be comparatively easily controlled by adjusting the amounts of active materials used in the positive and negative electrodes. The mass of the zinc or zinc alloy is, for example, 0.45 to 0.65 parts by mass, and more preferably 0.5 to 0.6 parts by mass per 1 part by mass of the manganese dioxide.

The negative electrode is obtained by, for example, mixing zinc or zinc alloy, a gelling agent, and an alkaline electrolyte.

For the gelling agent, any known gelling agent used in the field of alkaline primary batteries may be used without particular limitation, and, for example, a thickener and/or a water-absorbent polymer may be used. Examples of the gelling agent include polyacrylic acid and sodium polyacrylate.

The amount of the gelling agent is, for example, 0.5 to 2 parts by mass per 100 parts by mass of the zinc and zinc alloy. The amount of the zinc and zinc alloy is, for example, 175 to 225 parts by mass, and preferably 180 to 220 parts by mass per 100 parts by mass of the alkaline electrolyte.

(Negative electrode current collector)

The material of the negative electrode current collector to be inserted into the gel negative electrode is, for example, a metal alloy. The negative electrode current collector preferably contains copper, and may be made of, for example, an alloy containing copper and zinc, such as brass. The content of copper in a copper-containing negative electrode current collector is, for example, 50 to 70 mass%, and preferably 60 to 70 mass%. In the present invention, despite the use of a copper-containing negative electrode current collector, it is possible to effectively suppress a leakage during overdischarge by controlling the electric capacity ratio C2/C1 and the height ratio L2/L1. The negative electrode current collector may be plated with, for example, tin, as needed.

When the volume of the negative electrode current collector is large, the height of the negative electrode tends to be extremely increased as the negative electrode expands. In order to suppress an increase in height of the negative electrode, the volume of the negative electrode current collector is preferably set small. For example, a negative electrode current collector having a shank whose cross-sectional area parallel to the bottom surface of the battery is, for example, 1.4 mm$^2$ or less, and preferably 1.33 mm$^2$ or less is used. In view of the current collecting ability and the mechanical strength, the above cross-sectional area is set to, for example, 0.9 mm$^2$ or more, and preferably 0.95 mm$^2$ or more. These upper limits and lower limits of the cross-sectional area may be selected as appropriate and combined, and the cross-sectional area may be, for example, in a range of 0.95 to 1.33 mm$^2$.

(Separator)

The material of separator is, for example, cellulose or polyvinyl alcohol. The cellulose may be a regenerated cellulose.

The separator may be a non-woven fabric mainly composed of fibers of the above material, or a microporous film such as cellophane. A non-woven fabric may be used in combination with a microporous film, and, for example, a non-woven fabric including polyvinyl alcohol fibers may be laminated with cellophane.

The expansion of the negative electrode in the overdischarge range is predominant in the direction of the height of the negative electrode. However, by selecting the form of the separator or adjusting the thickness thereof, it is possible to allow the separator to absorb this expansion of the negative electrode in the direction of the diameter, and thus to more easily control the height ratio L2/L1. This is because the separator having flexibility acts as a cushion that absorbs expansion of the negative electrode. Specifically, the separator is compressed and its apparent thickness is decreased in association with the expansion of the negative electrode, so that the expansion of the negative electrode is absorbed in the direction of the diameter.

In view of the cushioning property, it is preferable to use a nonwoven fabric as the separator. Examples of the nonwoven fabric include a mixed nonwoven fabric mainly composed of cellulose fibers and polyvinyl alcohol fibers, and a mixed nonwoven fabric mainly composed of rayon fibers and polyvinyl alcohol fibers.

In terms of the cushioning property, the thickness of the separator is, for example, 180 $\mu$m or more, and preferably 200 $\mu$m or more. In view of preventing the internal resistance from increasing too much, the thickness of the separator is, for example, 300 $\mu$m or less, and preferably 270 $\mu$m or less. These upper limits and lower limits may be selected as appropriate and combined, and the thickness of the separator may be, for example, in a range of 200 to 300 $\mu$m, or of 200 to 270 $\mu$m.

The separator preferably has the above thickness as a whole, and if a sheet constituting the separator is thin, two or more sheets may be stacked so that the thickness falls within the above range. For example, a nonwoven fabric may be wound three turns, to form a tubular separator.

It should be noted that the above-mentioned thickness of the separator does not mean a thickness of a single sheet constituting the separator, but means an overall thickness of the dry separator in the form of being positioned between the positive electrode and the negative electrode. The thickness of the separator may be measured, for example, with a micrometer after the separator was taken out from the battery and allowed to stand for 24 hours in a 45°C environment, thereby to remove moisture therefrom.

Although a bottomed cylindrical separator is shown in Fig. 1, the separator is not limited thereto, and may be of any shape known in the field of alkaline primary batteries. For example, a cylindrical separator and a bottom paper (or a bottom separator) may be used in combination.

(Alkaline electrolyte)

The alkaline electrolyte is impregnated in the positive electrode, the negative electrode and the separator. For example, an aqueous alkaline solution containing potassium hydroxide is used as the alkaline electrolyte. The concentration of potassium hydroxide in the alkaline electrolyte is preferably 30 to 38 mass%.

The aqueous alkaline solution may further contain zinc oxide. The concentration of zinc oxide in the alkaline electrolyte is preferably 1 to 3 mass%.

(Battery case)

For example, a bottomed cylindrical metal case is used as the battery case. The metal case is made of, for example, a nickel-plated steel sheet. In order to achieve good adhesion between the positive electrode and the battery case, it is preferable to use a battery case obtained by coating the inside surface of a metal case with a carbon coating.

[Examples]

The present invention is specifically described below with reference to Examples and Comparative Examples. It should be noted, however, the present invention is not limited to the following Examples.

Example 1

AA-size alkaline dry batteries A1 to A10(LR6) as shown in Fig. 1 were produced in the below-described procedures (1) to (3). The influence of the electric capacity ratio C2/C1 on a leakage during overdischarge was evaluated using the obtained alkaline dry batteries.

(1) Production of positive electrode

Electrolytic manganese dioxide powder (average particle diameter (D50): 35 $\mu$m) serving as a positive electrode active material was mixed with graphite powder (average particle diameter (D50): 8 $\mu$m) serving as a conductive agent, to give a mixture. The mass ratio of the electrolytic manganese dioxide powder to the graphite powder was set to 92.4: 7.6. The electrolytic manganese dioxide powder used here had a specific surface area of 41 m$^2$/g. An electrolyte was added to the mixture, and these were stirred sufficiently, and then, compression-molded into flakes, to give a positive electrode material mixture. The mass ratio of the mixture to the electrolyte was set to 100:1.5. The electrolyte used here was an aqueous alkaline solution containing potassium hydroxide (concentration: 35 mass%) and zinc oxide (concentration: 2 mass%).

The positive electrode material mixture flakes were crushed into granules, and the granules were classified through a sieve. The granules having a size of 10 to 100 mesh were used in a mass as shown in Table 1, and compression-molded into a predetermined hollow cylindrical shape of 13.65 mm in outer diameter. Two positive electrode pellets were produced in such a manner.

(2) Production of negative electrode

Zinc alloy powder (average particle diameter (D50): 130 $\mu$m) serving as a negative electrode active material, the above electrolyte, and a gelling agent were mixed in a mass ratio of (180 to 218):100:2.1, to give a negative electrode 3 in a gel state. The zinc alloy used here was a zinc alloy containing 0.02 mass% of indium, 0.01 mass% of bismuth, and 0.005 mass% of aluminum. The zinc alloy powder contained particles passing through a 200-mesh sieve, in a ratio of 30 mass%, and particles not passing through a 100-mesh sieve, in a ratio of 40 mass%. The gelling agent used here was a mixture of a thickener comprising cross-linked branched polyacrylic acid and a water-absorbent polymer comprising highly cross-linked linear sodium polyacrylate. The mass ratio of the thickener to the water-absorbent polymer was set to 0.7:1.4.

(3) Assembling of alkaline battery

Vamiphite available from Nippon Graphite Industries, Ltd. was applied to the inside surface of a bottomed cylindrical battery case (outer diameter: 13.80 mm, wall thickness of cylindrical portion: 0.15 mm, height: 50.3 mm) made of a nickel-plated steel sheet, to form a carbon coating having a thickness of about 10 $\mu$m, whereby a battery case 1 was obtained. Two positive electrode pellets were inserted upright into the battery case 1, and then compressed, to form a positive electrode 2 in close contact with the inner wall of the battery case 1. A bottomed cylindrical separator 4 (thickness: 0.27 mm) was placed inside the positive electrode 2, and thereafter, the above electrolyte was injected and impregnated into the separator4. These were allowed to stand in this state for a predetermined time period, to allow the electrolyte to permeate from the separator 4 to the positive electrode 2. Thereafter, the gel negative electrode 3 was filled inside the separator 4 in a mass as shown in Table 1.

For the separator 4, one sheet of mixed nonwoven fabric (basis weight: 28 g/m$^2$, thickness: 0.09 mm) mainly composed of solvent-spun cellulose fibers and polyvinyl alcohol fibers in a mass ratio of 1:1 was used by being wound three turns.

A negative electrode current collector 6 was prepared by press-working a typical brass (Cu content: about 65 mass%, Zn content: about 35 mass%) into a nail shape, and plating its surface with tin. The diameter of the shank of the negative electrode current collector 6 was set to 1.15 mm. The head of the negative electrode current collector 6 was electrically welded to a negative electrode terminal plate 7 made by a nickel-plated steel sheet. The shank of the negative electrode current collector 6 was then inserted into the through hole at the center of a gasket 5 mainly composed of polyamide-6,12. In such a manner, a sealing unit 9 comprising the gasket 5, the negative electrode terminal plate 7 and the negative electrode current collector 6 was fabricated.

Next, the sealing unit 9 was placed at the opening of the battery case 1. As this time, the shank of the negative electrode current collector 6 was inserted into the negative electrode 3. The opening end of the battery case 1 was crimped onto the periphery of the negative electrode terminal plate 7, with the gasket 5 interposed therebetween, to seal the opening of the battery case 1. The outside surface of the battery case 1 was covered with an outer label 8. In the manner as described above, alkaline dry batteries A1 to A10 were produced.

Using the obtained alkaline dry batteries, the ratio C2/C1 of the electric capacity of the negative electrode to that of the positive electrode and the ratio L2/L1 of the height of the negative electrode to that of the positive electrode were measured, and the overdischarge tests A and B were evaluated, in the manner as described below. The inside diameter of the positive electrode was measured by the method as describe below.

(Electric capacity ratio C2/C1)

The electric capacity C1 of the positive electrode and the electric capacity C2 of the negative electrode were measured by the following methods, respectively.

The alkaline dry battery was disassembled one week after its assembling, and the whole positive electrode and the whole negative electrode were taken out from the battery.

The whole positive electrode thus taken out was sufficiently dissolved in acid, from which insoluble matter was filtered off, to obtain a sample solution. The content of manganese (Mn) in the sample solution was determined by an ICP emission spectrometry (inductively coupled plasma atomic emission spectroscopy). The content of Mn was converted into an amount of manganese dioxide ($MnO_2$), to determine a mass of manganese dioxide in the positive electrode. The capacity of manganese dioxide was assumed as 308 mAh/g, and this value was multiplied by the mass of the manganese dioxide in the positive electrode, to determine an electric capacity C1 of the positive electrode.

From the whole negative electrode thus taken out, water-soluble matter and the gelling agent were removed by decantation using water as a solvent. The remaining solid was dried sufficiently, to extract a negative electrode active material, and the mass of the negative electrode active material was measured. The capacity of zinc was assumed as 820 mAh/g, and this value was multiplied by the mass of the negative electrode active material, to determine an electric capacity C2 of the negative electrode.

The electric capacity C2 of the negative electrode was divided by the electric capacity C1 of the positive electrode, to determine an electric capacity ratio C2/C1.

(Height ratio L2/L1 and inside diameter of positive electrode)

An image of the alkaline dry battery was taken with an X-ray camera one week after its assembling, and the distances from the bottom to the top surface of the positive electrode and the negative electrode were measured as the heights L1 and L2 of the positive electrode and the negative electrode. In the case where the top surface of the negative electrode was not horizontal with the bottom surface thereof, the height L2 was measured assuming that a horizontal top surface was present halfway between the uppermost point and the lowermost point of the top surface. The height L2 of the negative electrode was divided by the height L1 of the positive electrode, to determine a height ratio L2/L1.

The inside diameter of the positive electrode was measured on the image taken with an X-ray camera.

(Overdischarge testA)

One of the assembled alkaline dry batteries was discharged at a temperature of $20 \pm 1$°C through a resistance of 4Ω. One month after the start of discharge, the presence or absence of leakage was checked. A total of ten alkaline dry batteries were subjected to this test, and on the basis of the number of batteries with leakage, the leakage resistance during overdischarge was evaluated.

(Overdischarge test B)

Four of the assembled alkaline dry batteries were connected in series, and discharged at a temperature of $20 \pm 1$°C through a resistance of 16 Ω. One month after the start of discharge, the presence or absence of leakage was checked. A total of ten sets of four alkaline dry batteries were subjected to this test, and on the basis of the number of sets with leakage, the leakage resistance during overdischarge was evaluated.

The sizes, masses, and electric capacities of the positive electrode and negative electrodes, together with the results of the above evaluation, are shown in Table 1.

[Table 1]

| Battery No. | Positive electrode | | | | Negative electrode | | | | L2/L1 | C2/C1 | Overdischarge test | |
| --- | --- | --- | --- | --- | --- | --- | --- | --- | --- | --- | --- | --- |
| | Inside diameter (mm) | L1 (mm) | Mass (g) | C1 (A/h) | Zn alloy : electrolyte (mass ratio) | L2 (mm) | Mass (g) | C2 (A/h) | | | A | B |
| A1 | 8.9 | 42.9 | 11.01 | 2.855 | 180:100 | 41.6 | 5.85 | 3.048 | 0.97 | 1.07 | 0 | 0 |
| A2 | 9.0 | | 10.82 | 2.805 | 180:100 | | 5.98 | 3.115 | | 1.11 | 0 | 0 |
| A3 | 8.9 | | 11.01 | 2.855 | 193:100 | | 6.04 | 3.223 | | 1.13 | 0 | 0 |
| A4 | 8.9 | | 11.01 | 2.855 | 205:100 | | 6.24 | 3.401 | | 1.19 | 0 | 1 |
| A5 | 8.9 | | 11.01 | 2.855 | 218:100 | | 6.44 | 3.578 | | 1.25 | 0 | 2 |
| A6 | 8.9 | | 11.01 | 2.855 | 180:100 | 40.7 | 5.75 | 2.996 | 0.95 | 1.05 | 0 | 0 |
| A7 | 9.0 | | 10.82 | 2.805 | 180:100 | | 5.87 | 3.058 | | 1.09 | 0 | 0 |
| A8 | 9.0 | | 10.82 | 2.805 | 193:100 | | 6.07 | 3.239 | | 1.15 | 0 | 0 |
| A9 | 9.0 | | 10.82 | 2.805 | 205:100 | | 6.27 | 3.418 | | 1.22 | 0 | 1 |
| A10 | 9.0 | | 10.82 | 2.805 | 218:100 | | 6.47 | 3.596 | | 1.28 | 0 | 1 |

Table 1 shows that there are cases where, even though no leakage occurred in the overdischarge test A for a single battery, leakage occurred in the overdischarge test B in the case of using a plurality of alkaline dry batteries connected in series.

Both when the height ratio L2/L1 was 0.97 and when it was 0.95, leakage occurred when the electric capacity ratio C2/C1 was high. However, when the height ratio L2/L1 was 0.97, leakage occurred even though the value of electric capacity ratio C2/C1 was low, as compared when the height ratio L2/L1 was 0.95.

Example 2

In this Example, the electric capacity ratio C2/C1 was set to a constant value, and the influence of the height ratio L2/L1 on a leakage during overdischarge was checked.

Alkaline dry batteries V1 to Z10 were produced in the same manner as in Example 1, except that the sizes and the masses of the active materials of the positive and negative electrodes, and the mass ratio of the negative electrode active material to the electrolyte were changed as shown in Tables 2 to 6.

Using the obtained alkaline dry batteries, the electric capacity ratio C2/C1 and the height ratio L2/L1 were measured, and the overdischarge tests A and B were evaluated, in the same manner as in Example 1.

The sizes, masses and electric capacities of the positive and negative electrodes, together with the results of the above evaluation, are shown in Tables 2 to 6. The values of the electric capacity ratio C2/C1 and the height ratio L2/L1 are also shown in these tables.

[Table 2]

| Battery No. | Positive electrode | | | | Negative electrode | | | | L2/L1 | C2/C1 | Overdischarge test | |
|---|---|---|---|---|---|---|---|---|---|---|---|---|
| | Inside diameter (mm) | L1 (mm) | Mass (g) | C1 (A/h) | Zn alloy : electrolyte (mass ratio) | L2 (mm) | Mass (g) | C2 (A/h) | | | A | B |
| V1 | 8.4 | 42.9 | 11.94 | 3.095 | 180:100 | 51.2 | 6.24 | 3.251 | 1.19 | 1.05 | 2 | 10 |
| V2 | 8.5 | | 11.76 | 3.048 | | 48.9 | 6.15 | 3.201 | 1.14 | | 1 | 7 |
| V3 | 8.6 | | 11.57 | 3.001 | | 46.7 | 6.05 | 3.152 | 1.09 | | 0 | 4 |
| V4 | 8.7 | | 11.39 | 2.953 | | 44.7 | 5.95 | 3.100 | 1.04 | | 0 | 2 |
| V5 | 8.8 | | 11.20 | 2.904 | | 42.6 | 5.86 | 3.050 | 0.99 | | 0 | 0 |
| V6 | 8.9 | | 11.01 | 2.855 | | 40.8 | 5.76 | 2.998 | 0.95 | | 0 | 0 |
| V7 | 9.0 | 42.8 | 10.82 | 2.805 | | 39.0 | 5.66 | 2.946 | 0.91 | | 0 | 0 |
| V8 | 9.1 | | 10.62 | 2.755 | | 37.2 | 5.55 | 2.893 | 0.87 | | 0 | 0 |
| V9 | 9.2 | | 10.43 | 2.704 | | 35.6 | 5.45 | 2.839 | 0.83 | | 0 | 0 |
| V10 | 9.3 | | 10.23 | 2.653 | | 34.0 | 5.35 | 2.787 | 0.79 | | 0 | 0 |

[Table 3]

| Battery No. | Positive electrode | | | | Negative electrode | | | | L2/L1 | C2/C1 | Overdischarge test | |
|---|---|---|---|---|---|---|---|---|---|---|---|---|
| | Inside diameter (mm) | L1 (mm) | Mass (g) | C1 (A/h) | Zn alloy : electrolyte (mass ratio) | L2 (mm) | Mass (g) | C2 (A/h) | | | A | B |
| W1 | 8.4 | 42.9 | 11.94 | 3.095 | 180:100 | 54.9 | 6.62 | 3.449 | 1.28 | 1.11 | 3 | 10 |
| W2 | 8.5 | | 11.76 | 3.048 | | 52.5 | 6.52 | 3.397 | 1.22 | | 2 | 10 |
| W3 | 8.6 | | 11.57 | 3.001 | | 50.1 | 6.41 | 3.339 | 1.17 | | 2 | 10 |
| W4 | 8.7 | | 11.39 | 2.953 | | 47.9 | 6.31 | 3.287 | 1.12 | | 1 | 7 |
| W5 | 8.8 | | 11.20 | 2.904 | | 45.8 | 6.21 | 3.235 | 1.07 | | 0 | 4 |
| W6 | 8.9 | | 11.01 | 2.855 | | 43.7 | 6.10 | 3.178 | 1.02 | | 0 | 2 |
| W7 | 9.0 | | 10.82 | 2.805 | | 41.8 | 6.00 | 3.126 | 0.97 | | 0 | 0 |
| W8 | 9.1 | | 10.62 | 2.755 | | 39.9 | 5.89 | 3.068 | 0.93 | | 0 | 0 |
| W9 | 9.2 | 42.8 | 10.43 | 2.704 | | 38.1 | 5.78 | 3.011 | 0.89 | | 0 | 0 |
| W10 | 9.3 | | 10.23 | 2.653 | | 36.3 | 5.67 | 2.954 | 0.85 | | 0 | 0 |

[Table 4]

| Battery No. | Positive electrode | | | | Negative electrode | | | | L2/L1 | C2/C1 | Overdischarge test | |
|---|---|---|---|---|---|---|---|---|---|---|---|---|
| | Inside diameter (mm) | L1 (mm) | Mass (g) | C1 (A/h) | Zn alloy : electrolyte (mass ratio) | L2 (mm) | Mass (g) | C2 (A/h) | | | A | B |
| X1 | 8.4 | | 11.94 | 3.095 | | 54.0 | 6.75 | 3.601 | 1.26 | | 3 | 10 |
| X2 | 8.5 | | 11.76 | 3.048 | | 51.6 | 6.65 | 3.548 | 1.20 | | 2 | 10 |
| X3 | 8.6 | | 11.57 | 3.001 | | 49.3 | 6.54 | 3.489 | 1.15 | | 2 | 10 |
| X4 | 8.7 | 42.9 | 11.39 | 2.953 | | 47.1 | 6.44 | 3.436 | 1.10 | | 1 | 7 |
| X5 | 8.8 | | 11.20 | 2.904 | 193:100 | 45.0 | 6.33 | 3.377 | 1.05 | 1.16 | 0 | 4 |
| X6 | 8.9 | | 11.01 | 2.855 | | 43.1 | 6.23 | 3.324 | 1.00 | | 0 | 1 |
| X7 | 9.0 | | 10.82 | 2.805 | | 41.1 | 6.12 | 3.265 | 0.96 | | 0 | 0 |
| X8 | 9.1 | | 10.62 | 2.755 | | 39.3 | 6.01 | 3.207 | 0.92 | | 0 | 0 |
| X9 | 9.2 | 42.8 | 10.43 | 2.704 | | 37.5 | 5.90 | 3.148 | 0.88 | | 0 | 0 |
| X10 | 9.3 | | 10.23 | 2.653 | | 35.8 | 5.78 | 3.084 | 0.84 | | 0 | 0 |

[Table 5]

| Battery No. | Positive electrode | | | | Negative electrode | | | | L2/L1 | C2/C1 | Overdischarge test | |
| --- | --- | --- | --- | --- | --- | --- | --- | --- | --- | --- | --- | --- |
| | Inside diameter (mm) | L1 (mm) | Mass (g) | C1 (A/h) | Zn alloy : electrolyte (mass ratio) | L2 (mm) | Mass (g) | C2 (A/h) | | | A | B |
| Y1 | 8.4 | 42.9 | 11.94 | 3.095 | 205:100 | 53.0 | 6.87 | 3.745 | 1.24 | 1.21 | 3 | 10 |
| Y2 | 8.5 | | 11.76 | 3.048 | | 50.7 | 6.77 | 3.690 | 1.18 | | 2 | 10 |
| Y3 | 8.6 | | 11.57 | 3.001 | | 48.5 | 6.67 | 3.636 | 1.13 | | 2 | 9 |
| Y4 | 8.7 | | 11.39 | 2.953 | | 46.4 | 6.56 | 3.576 | 1.08 | | 1 | 7 |
| Y5 | 8.8 | | 11.20 | 2.904 | | 44.3 | 6.45 | 3.516 | 1.03 | | 0 | 4 |
| Y6 | 8.9 | | 11.01 | 2.855 | | 42.3 | 6.34 | 3.456 | 0.99 | | 0 | 1 |
| Y7 | 9.0 | 42.8 | 10.82 | 2.805 | | 40.4 | 6.23 | 3.396 | 0.94 | | 0 | 0 |
| Y8 | 9.1 | | 10.62 | 2.755 | | 38.6 | 6.12 | 3.336 | 0.90 | | 0 | 0 |
| Y9 | 9.2 | | 10.43 | 2.704 | | 36.9 | 6.01 | 3.276 | 0.86 | | 0 | 0 |
| Y10 | 9.3 | | 10.23 | 2.653 | | 35.3 | 5.90 | 3.216 | 0.82 | | 0 | 0 |

[Table 6]

| Battery No. | Positive electrode | | | | Negative electrode | | | | L2/L1 | C2/C1 | Overdischarge test | |
|---|---|---|---|---|---|---|---|---|---|---|---|---|
| | Inside diameter (mm) | L1 (mm) | Mass (g) | C1 (A/h) | Zn alloy : electrolyte (mass ratio) | L2 (mm) | Mass (g) | C2 (A/h) | | | A | B |
| Z1 | 8.4 | | 11.94 | 3.095 | | 51.9 | 6.96 | 3.868 | 1.21 | | 3 | 10 |
| Z2 | 8.5 | | 11.76 | 3.048 | | 49.7 | 6.86 | 3.812 | 1.16 | | 2 | 10 |
| Z3 | 8.6 | 42.9 | 11.57 | 3.001 | | 47.4 | 6.75 | 3.751 | 1.10 | | 2 | 9 |
| Z4 | 8.7 | | 11.39 | 2.953 | | 45.3 | 6.64 | 3.690 | 1.06 | | 1 | 7 |
| Z5 | 8.8 | | 11.20 | 2.904 | 218:100 | 43.3 | 6.53 | 3.629 | 1.01 | 1.25 | 0 | 4 |
| Z6 | 8.9 | | 11.01 | 2.855 | | 41.4 | 6.42 | 3.568 | 0.97 | | 0 | 1 |
| Z7 | 9.0 | | 10.82 | 2.805 | | 40.0 | 6.31 | 3.507 | 0.93 | | 0 | 0 |
| Z8 | 9.1 | 42.8 | 10.62 | 2.755 | | 37.8 | 6.20 | 3.445 | 0.88 | | 0 | 0 |
| Z9 | 9.2 | | 10.43 | 2.704 | | 36.1 | 6.08 | 3.379 | 0.84 | | 0 | 0 |
| Z10 | 9.3 | | 10.23 | 2.653 | | 34.5 | 5.97 | 3.318 | 0.81 | | 0 | 0 |

EP 2 538 476 B1

As is clear from the results shown in Tables 2 to 6, the higher the height ratio L2/L1 was, the more likely leakage tended to occur in the overdischarge test A or B.

In Example 1, leakage was observed in the overdischarge test B when the electric capacity ratio C2/C1 was 1.19 or more (Table 1). However, as shown in Tables 5 and 6, by controlling the height ratio L2/L1, no leakage occurred in the overdischarge test B even when the electric capacity ratio C2/C1 was 1.21 or 1.25.

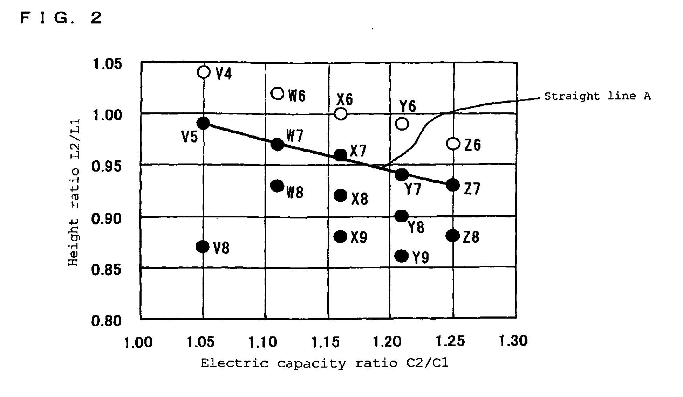

It was observed from the results in Tables 2 to 6 that the smallest value of the height ratio L2/L1 at which leakage occurred differs depending on the value of the electric capacity ratio C2/C1. In light of this observation, with respect to the battery whose height ratio L2/L1 was the lowest among those of the batteries with leakage, and some of the batteries without leakage, the relationship between the electric capacity ratio C2/C1 and the height ratio L2/L1 was evaluated. Fig. 2 shows a graph obtained by plotting the values of the height ratio L2/L1 against the values of the electric capacity ratio C2/C1. In Fig. 2, the batteries in which leakage occurred in the overdischarge test B are indicated by white dots, and the batteries in which no leakage occurred are indicated by black dots.

As shown in Fig. 2, the dots representing batteries V5, W7, X7, Y7 and Z7 whose height ratio L2/L1 was the highest among the batteries without leakage for each electric capacity C2/C1 were distributed on one almost straight line. This indicates that there is a strong correlation, which can be represented by a primary regression straight line A, between the electric capacity ratio C2/C1 and the L2/L1 in these batteries. Leakage was detected in all the batteries plotted in the region above the line A, i.e., the batteries having a height ratio L2/L1 above the line A.

It was found that the expression $f(C2/C1)$ representing the line A in Fig. 2 can be represented by L2/L1 = -0.3058 x C2/C1 + 1.3153. The expression representing the line A was determined by regression analysis using a spreadsheet available from Microsoft Corporation, "Microsoft Office Excel".

It would be understood from Fig. 2 and the expression representing the line A that it is important to set such that L2/L1 ≤ $f(C2/C1)$ for suppressing a leakage during overdischarge.

If L2/L1 is lower than 0.85, the area of the portion where the positive electrode and the negative electrode face each other is too small, and the reaction efficiency is reduced, resulting in a significant deterioration in discharge performance, which reduces the commercial value of the alkaline battery. Such deterioration in discharge performance becomes severe when using two or more batteries by connecting them to each other. Therefore, it is also important to set such that 0.85 ≤ L2/L1.

In short, as a result of paying attention to the ratio C2/C1 of the electric capacity of the negative electrode to that of the positive electrode, and evaluating in detail the relationship between the ratio C2/C1 and the ratio L2/L1 of the height of the negative electrode to that of the positive electrode, the following was revealed: when in the range of 1.05 ≤ C2/C1 ≤ 1.25 ... (1), 0.85 ≤ L2/L1 ≤ -0.3058 × C2/C1 + 1.3153 ... (2) is satisfied, no leakage occurs in both overdischarge tests A and B, and the deterioration in discharge performance can be suppressed.

This is presumably because, by controlling the balance between C2/C1 and L2/L1 within a preferable range, the gap in height between the positive electrode and the negative electrode was reduced and thus the reactivity was ensured when the voltage per one battery was within the range of about 0.8 to 0.2 V (hereinafter referred to as an "overdischarge range"), and as result, the zinc utilization rate was improved.

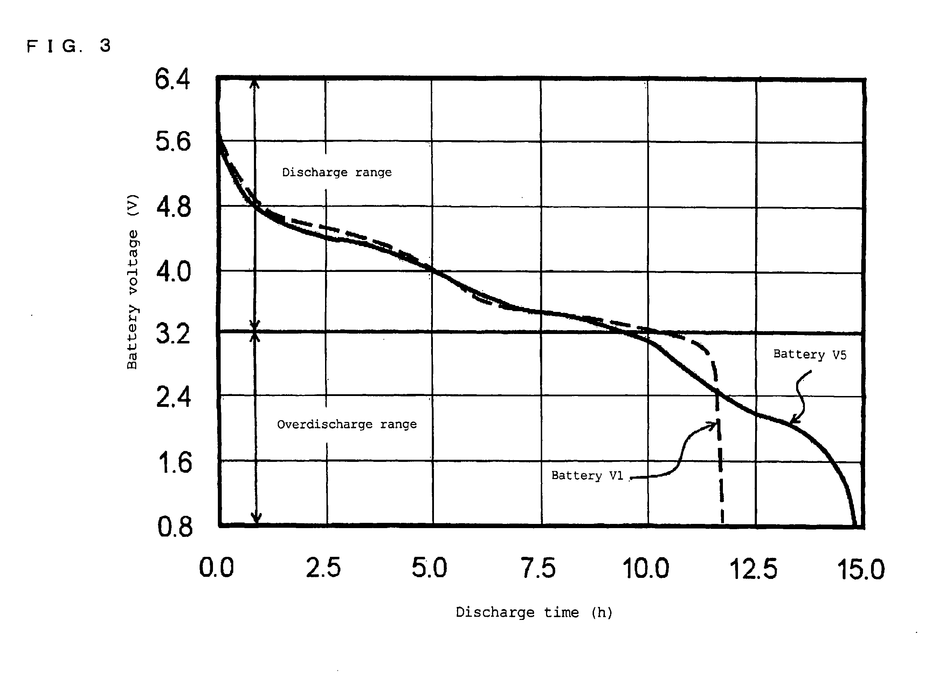

Fig. 3 is a graph showing a relationship between the discharge duration time per one battery when four batteries connected in series were discharged through a resistance of 16 Ω and the closed-circuit voltage during discharge, with respect to batteries V1 and V5.

As is clear from Fig. 3, the discharge capacity in the overdischarge range of battery V5 in which the C2/C1 and L2/L1 were controlled so as to satisfy the expressions (1) and (2) was larger than that of battery V1 in which the upper limit of L2/L1 did not satisfy the expression (2). As shown above, presumably as a result of increasing the discharge capacity in the overdischarge range, the amount of remaining zinc in the negative electrode is reduced, and thus the amount of gas to be generated is reduced, whereby an effect to suppress a leakage during overdischarge can be obtained.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accoordingly, it is intended that the appended claims be interpreted as covering all alterations and modifications as fall within the scope of the invention.

[Industrial Applicability]

The alkaline primary battery of the present invention is excellent in the leakage resistance during overdischarge, and therefore, suitably applicable to various devices using a dry battery as their power source. Particularly, it is also suitable for an application which uses two or more batteries connected in series and is prone to have leakage.

[Reference Signs List]

1    Battery case
2    Positive electrode
3    Negative electrode
4    Separator
5    Gasket
6    Negative electrode current collector
7    Negative electrode terminal plate
8    Outer label
9    Sealing unit

**Claims**

1.  An alkaline primary battery comprising:

> a bottomed cylindrical battery case;
> a cylindrical positive electrode having a hollow, being in contact with an inner wall of the battery case, and including manganese dioxide in the form of a powder;
> a gel negative electrode being in the hollow of the positive electrode, and including zinc or zinc alloy in the form of a powder;
> a separator interposed between the positive electrode and the negative electrode;
> an alkaline electrolyte;
> the positive electrode having an electric capacity C1 and a height L1;
> the negative electrode having an electric capacity C2 and a height L2;
> the electric capacity C1 and the electric capacity C2 satisfying the relational expression (1):

$$1.05 \leq C2/C1 \leq 1.25 \qquad (1);$$

> and
> the height L1 and the height L2 satisfying the relational expression (2):

$$0.85 \leq L2/L1 \leq f(C2/C1) \qquad (2),$$

> where $f(C2/C1) = -0.3058 \times C2/C1 + 1.3153$.

2.  The alkaline primary battery in accordance with claim 1, wherein the manganese dioxide is a powder having a specific surface area of 35 to 48 $m^2$/g.

3.  The alkaline primary battery in accordance with claim 1 or 2, wherein the zinc or zinc alloy is a powder containing particles not passing through a 100-mesh sieve, in a ratio of 20 to 55 mass%.

4.  The alkaline primary battery in accordance with any one of claims 1 to 3, wherein the separator has a thickness of 200 $\mu$m to 300 $\mu$m.

5.  The alkaline primary battery in accordance with any one of claims 1 to 4 being a AA-size battery.

**Patentansprüche**

1.  Alkalische Primärbatterie umfassend:

Ein mit einem Boden versehenes, zylindrisches Batteriegehäuse;

eine zylindrische positive Elektrode, die eine Aussparung aufweist, die in Kontakt mit einer inneren Wand des Batteriegehäuses ist und Mangandioxid in der Form eines Pulvers einschließt;

eine gelförmige negative Elektrode, die in der Aussparung der positiven Elektrode ist und die Zink oder eine Zinklegierung in der Form eines Pulvers einschließt;

einen zwischen der positiven Elektrode und der negativen Elektrode eingefügten Separator;

einen alkalischen Elektrolyten;

wobei die positive Elektrode eine elektrische Kapazität C1 und eine Höhe L1 aufweist;

die negative Elektrode eine elektrische Kapazität C2 und eine Höhe L2 aufweist;

die elektrische Kapazität C1 und die elektrische Kapazität C2 den folgenden Verhältnisausdruck (1) erfüllt:

$$1{,}05 \leq C2 / C1 \leq 1{,}25 \qquad (1);$$

und

die Höhe L1 und die Höhe L2 den Verhältnisausdruck (2) erfüllt:

$$0{,}85 \leq L2 / L1 \leq f(C2 / C1) \qquad (2),$$

wobei $f(C2 / C1) = -0{,}3058 \times C2 / C1 + 1{,}3153$.

2. Alkalische Primärbatterie nach Anspruch 1, wobei das Mangandioxid ein Pulver ist, das eine spezifische Oberfläche von 35 bis 48 m$^2$/g aufweist.

3. Alkalische Primärbatterie nach Anspruch 1 oder 2, wobei das Zink oder die Zinklegierung ein Pulver ist, das Teilchen, die nicht durch einen 100-Maschensieb treten, in einem Verhältnis von 20 bis 55 Masse-% enthält.

4. Alkalische Primärbatterie nach einem der Ansprüche 1 bis 3, wobei der Separator eine Dicke von 200 μm bis 300 μm aufweist.

5. Alkalische Primärbatterie nach einem der Ansprüche 1 bis 4, die eine Batterie in AA-Größe ist.

**Revendications**

1. Pile primaire alcaline comprenant :

un boîtier de pile cylindrique à fond ;

une électrode positive cylindrique présentant un creux, étant en contact avec une paroi interne du boîtier de pile, et comportant du dioxyde de manganèse sous forme d'une poudre ;

une électrode négative à gel se trouvant dans le creux de l'électrode positive, et comportant du zinc ou un alliage de zinc sous forme d'une poudre ;

un séparateur interposé entre l'électrode positive et l'électrode négative ;

un électrolyte alcalin ;

l'électrode positive ayant une capacité électrique C1 et une hauteur L1 ;

l'électrode négative ayant une capacité électrique C2 et une hauteur L2 ;

la capacité électrique C1 et la capacité électrique C2 satisfaisant l'expression de relation (1) :

$$1{,}05 \leq C2/C1 \leq 1{,}25 \qquad (1) \;;$$

et

la hauteur L1 et la hauteur L2 satisfaisant l'expression de relation (2) :

$$0{,}85 \leq L2/L1 \leq f(C2/C1) \qquad (2),$$

où f(C2/Cl) = -0,3058 $\times$ C2/C1 + 1,3153.

2. Pile primaire alcaline selon la revendication 1, dans laquelle le dioxyde de manganèse est une poudre ayant une surface spécifique allant de 35 à 48 m$^2$/g.

3. Pile primaire alcaline selon la revendication 1 ou 2, dans laquelle le zinc ou l'alliage de zinc est une poudre contenant des particules ne passant pas à travers un tamis de maille 100, dans un rapport de 20 à 55% en masse.

4. Pile primaire alcaline selon l'une quelconque des revendications 1 à 3, dans laquelle le séparateur a une épaisseur allant de 200 $\mu$m à 300 $\mu$m.

5. Pile primaire alcaline selon l'une quelconque des revendications 1 à 4, qui est une pile de dimension AA.

F I G. 1

F I G.  2

F I G. 3

**EP 2 538 476 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009151958 A

- JP 2009043417 A